(19) Europäisches Patentamt / European Patent Office / Office européen des brevets

(11) **EP 1 985 082 B1**

(12) **EUROPEAN PATENT SPECIFICATION**

(45) Date of publication and mention of the grant of the patent:
**22.04.2015 Bulletin 2015/17**

(21) Application number: **06832185.0**

(22) Date of filing: **08.12.2006**

(51) Int Cl.:
*H04L 27/00* (2006.01)  *H04B 7/02* (2006.01)
*H04B 7/08* (2006.01)  *H04L 27/34* (2006.01)
*H04L 27/38* (2006.01)  *H04B 7/155* (2006.01)
*H04L 27/26* (2006.01)

(86) International application number:
**PCT/IB2006/054720**

(87) International publication number:
**WO 2007/069172 (21.06.2007 Gazette 2007/25)**

(54) **INTEGER SPREADING ROTATION MATRICES FOR QAM CONSTELLATIONS AND ITS APPLICATION TO DECODE-REMODULATE-FORWARD COOPERATIVE COMMUNICATION STRATEGY**

GLEICHFÖRMIG GESTREUTE ROTATIONSMATRIZEN FÜR QAM-KONSTELLATIONEN UND IHRE ANWENDUNG ZUR DEKODIERUNG UND VORWÄRTS-MODULIERUNG EINER KOOPERATIVEN KOMMUNIKATIONSSTRATEGIE

MATRICES DE ROTATION D'ETALEMENT DE NOMBRES ENTIERS POUR DES CONSTELLATIONS DE MODULATION D'AMPLITUDE EN QUADRATURE (QAM) ET SON APPLICATION A LA STRATEGIE DE COMMUNICATION COOPERATIVE EN AVAL DE DECODAGE-REMODULATION-

(84) Designated Contracting States:
**AT BE BG CH CY CZ DE DK EE ES FI FR GB GR HU IE IS IT LI LT LU LV MC NL PL PT RO SE SI SK TR**

(30) Priority: **12.12.2005 US 749433 P**

(43) Date of publication of application:
**29.10.2008 Bulletin 2008/44**

(73) Proprietor: **Koninklijke Philips N.V.
5656 AE Eindhoven (NL)**

(72) Inventors:
- **YANG, Jun
  Briarcliff Manor, NY 10510-8001 (US)**
- **GHOSH, Monisha
  Briarcliff Manor, NY 10510-8001 (US)**

(74) Representative: **van Velzen, Maaike Mathilde
Philips
Intellectual Property & Standards
P.O. Box 220
5600 AE Eindhoven (NL)**

(56) References cited:
**EP-A1- 1 511 211**

- **BURY A ET AL: "Diversity comparison of spreading transforms for multicarrier spread spectrum transmission" IEEE TRANSACTIONS ON COMMUNICATIONS, IEEE SERVICE CENTER, PISCATAWAY, NJ, US LNKD- DOI: 10.1109/TCOMM.2003.811406, vol. 51, no. 5, 1 May 2003 (2003-05-01), pages 774-781, XP011096777 ISSN: 0090-6778**
- **MCCLOUD M L: "Analysis and Design of Short Block OFDM Spreading Matrices for Use on Multipath Fading Channels" IEEE TRANSACTIONS ON COMMUNICATIONS, IEEE SERVICE CENTER, PISCATAWAY, NJ, US LNKD-DOI:10.1109/TCOMM.2005.844919, vol. 53, no. 4, 1 April 2005 (2005-04-01), pages 656-665, XP011131338 ISSN: 0090-6778**

**(Cont. next page)**

- DOOSTNEJAD R ET AL: "Space-time spreading codes for a multiuser mimo system" CONFERENCE RECORD OF THE 36TH. ASILOMAR CONFERENCE ON SIGNALS, SYSTEMS, & COMPUTERS. PACIFIC GROOVE, CA, NOV. 3 - 6, 2002; [ASILOMAR CONFERENCE ON SIGNALS, SYSTEMS AND COMPUTERS], NEW YORK, NY : IEEE, US LNKD- DOI: 10.1109/ACSSC.2002.1197004, vol. 2, 3 November 2002 (2002-11-03), pages 1374-1378, XP010638423 ISBN: 978-0-7803-7576-5
- RAULEFS R ET AL: "Rotated spreading sequences for broadband multicarrier-CDMA" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US LNKD- DOI: 10.1109/VETECF.2003.1285143, 6 October 2003 (2003-10-06), pages 862-865VOL.2, XP010700951 ISBN: 978-0-7803-7954-1
- ADRIAN AGUSTIN ET AL: "Hybrid Turbo FEC/ARQ Systems and Distributed Space-Time Coding for Cooperative Transmission" INTERNATIONAL JOURNAL OF WIRELESS INFORMATION NETWORKS, KLUWER ACADEMIC PUBLISHERS-PLENUM PUBLISHERS, NE, vol. 12, no. 4, 1 December 2005 (2005-12-01), pages 263-280, XP019279725 ISSN: 1572-8129
- XIAOFEI ZHOU ET AL: "Space-Frequency Coded Cooperative Scheme Among Distributed Nodes In Cognitive UWB Radio" PERSONAL, INDOOR AND MOBILE RADIO COMMUNICATIONS, 2005. PIMRC 2005. IE EE 16TH INTERNATIONAL SYMPOSIUM ON BERLIN, GERMANY 11-14 SEPT. 2005, PISCATAWAY, NJ, USA,IEEE LNKD- DOI: 10.1109/PIMRC.2005.1651479, vol. 1, 11 September 2005 (2005-09-11), pages 461-465, XP010927218 ISBN: 978-978-38007-2-4

**Description**

The present invention relates to a system, apparatus, and method for increasing diversity of QAM communications by using specially derived spreading rotation matrices. An application of these spreading rotation matrices in a cooperative relaying scheme in which a relay node decodes-remodulates-forward (D-ReM-F) transmitted QAM signals achieves additional signal space diversity as well as cooperative diversity from distributed users.

Diversity is commonly used in wireless communication systems to combat multi-path fading and improve the system performance. Recent interest in ultra-wideband technology has focused on multi-band OFDM systems that can exploit the high diversity resulting from multiple independent frequency bands. To achieve full diversity with high data rate, one technique that can be used is coded modulation with spreading rotation of transmitted signals, such as the dual-carrier modulation (DCM) proposed in the MBOA PHY specification for 4-QAM signals and rotated DFT spreading matrix. Further, many signal space diversity from lattice coding techniques have been also proposed in the literature.

While the DCM scheme can achieve diversity 2 for 4-QAM (QPSK) signals, its optimality, in the sense of maximizing the coding gain, has not been established. For rotated DFT matrices, the coding gain may not be maximized because the purpose of their design is to achieve full diversity. In addition, their complex structure also increases the decoding complexity for the receiver.

For 4-QAM signals, a method for designing an integer rotation matrix to achieve diversity 3 or 4 is still an open issue.

Cooperative strategies for wireless networks are drawing a lot of attention recently, because they can facilitate the communication between the nodes in the network without any fixed infrastructure. The so-called cooperative diversity is associated with the ability of users to share their antennas in a distributed way and achieve more diversity gain from different versions of a transmitted signal.

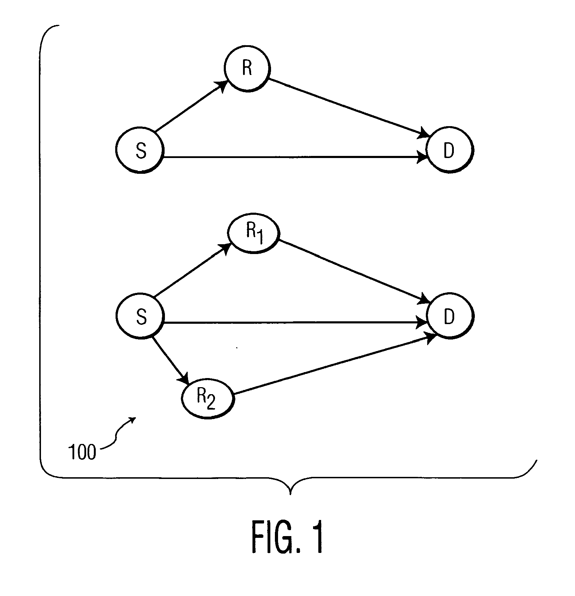

A typical relay scenario, shown in FIG. 1, consists of a source node S, at least one relay node R, and a destination node D. Various practical schemes have been proposed to exploit the benefits of cooperation among nodes, which schemes are usually classified into two categories: *amplifier-forward* (AF) and *decode-forward* (DF). In AF mode, a relay node simply scales and retransmits a correctly received signal waveform received from a source.

In DF mode, the correctly received signal from the source is demodulated and decoded before transmission. Due to the possibility of decoding error, DF can be switched to non-cooperative mode in the case of a failed cyclic redundancy check (CRC). AF requires low implementation complexity of digital signal processing at the relay node, and it can operate under all source-relay (S-R) channel conditions. However, AF also amplifies the noise power at the same time. When the quality of the S-R channel is good and the signal can be decoded correctly at the relay node, DF can achieve a higher gain and also give space to more complicated schemes, such as *coded cooperation,* in which the data are re-encoded at the relay to obtain a different set of parity bits.

Recently, several hybrid or mixed modes such as amplify-decode-forward or decode-amplify-forward have been proposed for better utilization of the gain from both modes. A way to take advantage of signal space diversity and applying it to cooperative communications is needed as a possibly better alternative to these resent proposals.

In Bury et al. (Bury, Andreas; Egle, Jochem; Lindner, Jürgen; "Diversity comparison of spreading transforms for multicarrier spread spectrum transmission"; IEEE Transactions on Communications; 2003) a comparison of spreading transforms for multicarrier spread spectrum transmission is presented. Multicarrier spread spectrum transmission methods based on orthogonal frequency division multiplexing employ a linear transform to spread energy of transmitted symbols over statistically independent Rayleigh fading subcarriers, in order to enable a diversity gain at the receiver. We jointly treat the mapping from bits into transmit symbols and the spreading transform as a code in Euclidean space. We describe criteria to identify good and bad spreading transforms, in terms of the asymptotic bit-error probability (BEP) at high signal-to-noise ratio. Upper and lower bounds on the BEP are derived. It is shown that the BEP performance of the commonly used Hadamard transform is asymptotically bad. Alternative orthogonal transforms with better asymptotic performance are proposed. Simulation results are given for the example of 2-phase-shift keying, block length 8.

In McCloud (McCloud, Michael L.; "Analysis and design of short block OFDM spreading matrices for use on multipath fading channels"; IEEE Transactions on Communications; 2005) an analysis and design of short block OFDM spreading matrices for use on multipath fading channels is presented. The use of block spreading in a multicarrier system to gain diversity advantage when employed over multipath fading channels is considered. The main idea is to split the full set of subcarriers into smaller blocks and spread the data symbols across these blocks via unitary spreading matrices in order to gain multipath diversity across each block at the receiver. The problem of designing the spreading matrix as a finite dimensional optimization problem in which the asymptotic error is minimized is posed. This formulation allows to find explicit solutions for the optimal spreading matrices. The performance is validated for the uncoded channel as well as for the coded channel employing turbo-iterative decoding. Further it is demonstrated that suboptimal linear complexity equalization strategies for spread orthogonal frequency division multiplexing (OFDM) do not gain any diversity advantage over traditional diagonal OFDM.

In EP 1511211 A1 a method for transmitting data in a MIMO telecommunication system offering a high diversity as perceived from a receiver end is disclosed. The invention relates to a method for transmitting data between a transmitter provided with at least two transmitting antennas (tal, ta2...taNt) and a receiver. The method according to the invention further includes a symbol spreading step in the course of which components Zij (for i=1 to S and j=1 to Nt) of a predetermined number of successive symbols Z1...ZS are to be spread over time before being transmitted over said transmitting antennas (tal, ta2...taNt). The data transmitted at any given moment will thus not be representative of a single symbol Zi (for i=1 to S), as is the case in known MIMO systems, but will represent a mixture between Nt components of S successive symbols, which introduces data diversity with respect to time as perceived at the receiver end.

In Doostnejad et al. (Doostnejad, Roya; Lim, Teng Joon, Sr.;Sousa, Elvino S.; "Space-time spreading codes for a multiuser MIMO system", in Conference Record of the Thirty-Sixth Asilomar Conference on Signals, Systems and Computers, 2002.) space-time spreading codes for a multiuser MIMO system are presented. The use of the spatial dimension in enabling multiple access for the down-link of a cellular communication system and propose a two dimensional spreading code is studied. By using a minimum number of transmit and receive antennas, the bandwidth efficiency is increased over a single antenna system, while diversity is provided at the receiver. A key feature of the proposed technique is that it simplifies the implementation of joint space-time decoding and multiuser detection in each user station. It is supposed that the channel is known only at the receiver.

In Raulefs et al. (Raulefs, Ronald; Dammann, Armin; Kaiser, Stefan; Auer, Guntlier; "Rotated spreading sequences for broadband multicarrier-CDMA", in IEEE 58th Vehicular Technology Conference, 2003), Rotated spreading sequences for broadband multicarrier-CDMA are presented. An extension of the pure Walsh-Hadamard spreading sequences for MC-CDMA is presented. By rotating the phase of the modulated signal before spreading, the signal space is exploited more efficiently. After spreading, the Euclidean distance of each superposed constellation is distributed more favourably in the signal space than without rotating. Our novel approach combines the more favourable distributed Euclidean distance, caused by rotation, and a multiuser detector (MUD). A MUD exploits the more favourably distributed Euclidean distance, which a single-user detector, like, e.g., MMSE, is not able to do. The novel combination of these two techniques offers up to 3 dB gain for 4-QAM in comparison to the non rotated Walsh-Hadamard sequences in an MC-CDMA system. The performance gain gets lost in a coded system applying a convolutional code with a Hamming distance of ten. A gain of 1 dB can be retrieved by applying convolutional codes with higher code rates that offer a lower Hamming distance of three for a fully loaded system.

The system, apparatus and method of the present invention provide integer 2x2, 3x3, and 4x4 spreading rotation matrices to achieve more diversity in QAM communications. That is, in the first preferred embodiment, a 2x2, 3x3, 4x4 set of rotation matrices is provided from the point of view that it use of one of these constitutes a linear modulation scheme over several independent channels for a single source-destination communication. This linear modulation scheme achieves higher order diversity due to the joint decoding of the transmitted signal at the receiver.

An application of this technique to cooperative communications being motivated by the observation that in a wireless local or personal network, co-located devices have the same encoding or decoding processes, i.e., bit-interleaved coded modulation, and cooperation at the symbol level can be achieved by combining re-modulation using the spreading-rotation matrices technique with DF mode. Therefore, the signal space diversity is exploited to further improve the overall system performance in addition to the cooperative diversity provided by DF mode.

FIG. 1 illustrates a typical relay scenario;
FIG. 2 illustrates spreading two 16-QAM symbols into non-uniform 256-QAM symbols;
FIG. 3 illustrates spreading and rotating three 4-QAM symbols into non-uniform 64-QAM symbols;
FIG. 4 illustrates spreading four 4-QAM symbols into non-uniform 256-QAM symbols;
FIG. 5 illustrates a transmitter using a 3x3 spreading rotation matrix to transmit spread and rotated symbols over 3 sub-channels;
FIG. 6 illustrates the performance of prior art DMF and D-ReM-F of the present invention;
FIG. 7 illustrates that performance advantage of a D-ReM-F scheme according to the present invention; and
FIG. 8 illustrates a system including the transmitter of FIG. 5.

It is to be understood by persons of ordinary skill in the art that th e following descriptions are provided for purposes of illustration and not for limitation. An artisan understands that there are many variations that lie within the scope of the appended claims. Unnecessary detail of known functions and structure may be omitted from the current descriptions so as not to obscure the present invention.

To find 2x2 rotation matrix for QAM symbols, the basic system model is

$$\begin{bmatrix} y_1 \\ y_2 \end{bmatrix} = \begin{bmatrix} h_1 & 0 \\ 0 & h_2 \end{bmatrix} \bullet \begin{bmatrix} \cos(\theta) & \sin(\theta) \\ \sin(\theta) & -\cos(\theta) \end{bmatrix} \begin{bmatrix} x_1 \\ x_2 \end{bmatrix} + \begin{bmatrix} n_1 \\ n_2 \end{bmatrix}, \quad x_1, x_2 \in \{\pm 3 \pm 3i\}$$

EP 1 985 082 B1

which is then changed into

$$
\begin{bmatrix} y_1 \\ y_2 \end{bmatrix} = \begin{bmatrix} x_1\cos(\theta)+x_2\sin(\theta) & 0 \\ 0 & x_1\sin(\theta)-x_2\cos(\theta) \end{bmatrix}\begin{bmatrix} h_1 \\ h_2 \end{bmatrix} + \begin{bmatrix} n_1 \\ n_2 \end{bmatrix}, \quad x_1,x_2 \in \{\pm 3 \pm 3i\}
$$

Calculate

$$
\min_{\Delta x_1,\Delta x_2} \left|\Delta x_1\cos(\theta)+\Delta x_2\sin(\theta)\right|^2 \bullet \left|\Delta x_1\sin(\theta)-\Delta x_2\cos(\theta)\right|^2
$$

where $\Delta x_1 = x_1 - x_1'$, $\Delta x_2 = x_2 - x_2'$
for every angle theta and find the one which maximizes the coding gain.

To find 3x3 matrices for QAM symbols, the Euler rotation matrix is used as a template:

$$
\begin{bmatrix} 1 & 0 & 0 \\ 0 & \cos(\alpha) & \sin(\alpha) \\ 0 & \sin(\alpha) & -\cos(\alpha) \end{bmatrix}\begin{bmatrix} \cos(\beta) & \sin(\beta) & 0 \\ \sin(\beta) & -\cos(\beta) & 0 \\ 0 & 0 & 1 \end{bmatrix}\begin{bmatrix} \cos(\theta) & 0 & \sin(\theta) \\ 0 & 1 & 0 \\ \sin(\theta) & 0 & -\cos(\theta) \end{bmatrix}
$$

or the following circular matrix is used as a template

$$
\begin{bmatrix} a & b & -c \\ -c & a & b \\ b & -c & a \end{bmatrix}
$$

where $a^2+b^2+c^2=1$.
To find 4x4 matrices for QAM symbols, the following real orthogonal matrix is used as a template:

$$
\begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}.
$$

The 2x2 real rotation matrix for two QAM symbols can be found as

$$
R_{16.2} = \begin{bmatrix} 0.8507 & 0.5257 \\ 0.5257 & -0.8507 \end{bmatrix}
$$

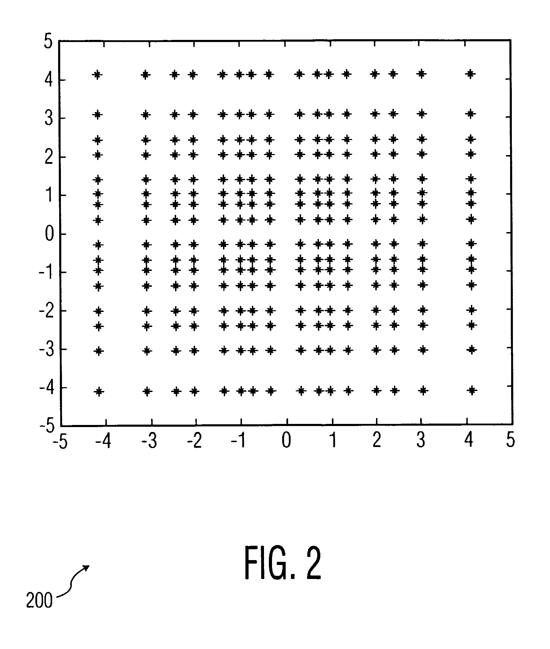

For example, it can spread two 16-QAM symbols into non-unifonn 256-QAM symbols as shown in FIG. 2.
In a first preferred embodiment, an integer spreading rotation matrix that can spread two 16-QAM symbols into regular 256-QAM symbols is obtained as

$$
I_{16.2} = \frac{1}{\sqrt{17}}\begin{bmatrix} 4 & 1 \\ 1 & -4 \end{bmatrix}.
$$

Similarly, 2x2 integer spreading rotation matrices that can spread 64 -QAM symbols and 256-QAM symbols are obtained respectively as

$$I_{642} = \frac{1}{\sqrt{65}}\begin{bmatrix} 8 & 1 \\ 1 & -8 \end{bmatrix}, \quad I_{25\mathbb{Q}} = \frac{1}{\sqrt{257}}\begin{bmatrix} 16 & 1 \\ 1 & -16 \end{bmatrix},$$

The 3x3 real rotation matrix for three QAM symbols can be found as

$$R_{4,3} = \begin{bmatrix} 0.5910 & 0.7370 & -0.3280 \\ -0.3280 & 0.5910 & 0.7370 \\ 0.7370 & -0.3280 & 0.5910 \end{bmatrix}$$

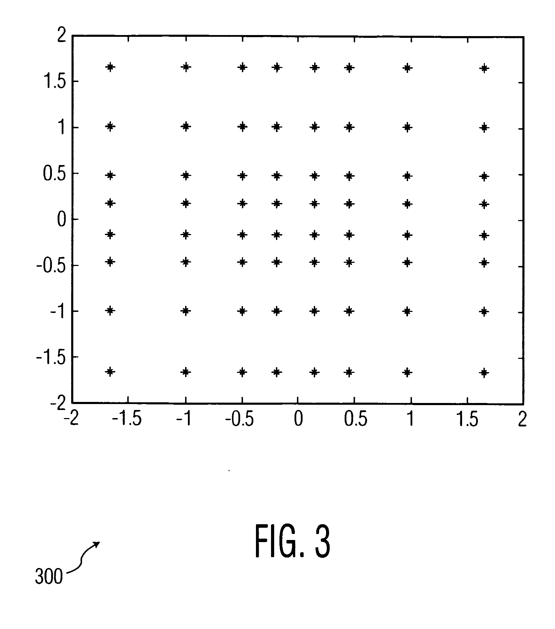

which spreads 4-QAM symbols into non-uniform 64-QAM symbol as shown in FIG. 3.
In a first preferred embodiment, integer approximations are obtained from the real pattern of FIG. 3, which spread 4-QAM symbols into regular 64-QAM symbols:

$$I_{4,3} = \frac{1}{\sqrt{21}}\begin{bmatrix} 4 & 2 & -1 \\ -1 & 4 & 2 \\ 2 & -1 & 4 \end{bmatrix}, \frac{1}{\sqrt{21}}\begin{bmatrix} 4 & -2 & 1 \\ 1 & 4 & -2 \\ -2 & 1 & 4 \end{bmatrix}$$

Any permutation of the above two matrices between rows or columns is also a valid rotation matrix. Similarly, 3x3 integer spreading rotation matrices that can spread three 16-QAM symbols, three 64-QAM symbols and three 256-QAM symbols are obtained respectively as

$$I_{16,3} = \frac{1}{\sqrt{273}}\begin{bmatrix} 16 & 4 & -1 \\ -1 & 16 & 4 \\ 4 & -1 & 16 \end{bmatrix}, \frac{1}{\sqrt{273}}\begin{bmatrix} 16 & -4 & 1 \\ 1 & 16 & -4 \\ -4 & 1 & 16 \end{bmatrix}$$

$$I_{64,3} = \frac{1}{\sqrt{4161}}\begin{bmatrix} 64 & 8 & -1 \\ -1 & 64 & 8 \\ 8 & -1 & 64 \end{bmatrix}, \frac{1}{\sqrt{4161}}\begin{bmatrix} 64 & -8 & 1 \\ 1 & 64 & -8 \\ -8 & 1 & 64 \end{bmatrix}$$

$$I_{256,3} = \frac{1}{\sqrt{65793}}\begin{bmatrix} 256 & 16 & -1 \\ -1 & 256 & 16 \\ 16 & -1 & 256 \end{bmatrix}, \frac{1}{\sqrt{65793}}\begin{bmatrix} 256 & -16 & 1 \\ 1 & 256 & -16 \\ -16 & 1 & 256 \end{bmatrix}$$

Any permutation of each above matrix between rows or columns is also a valid rotation matrix.
The 4x4 real rotation matrix for QAM symbols can be found as

$$R_{4,4} = \begin{bmatrix} 0.2334 & 0.7469 & 0.4752 & 0.4023 \\ -0.7469 & 0.2334 & -0.4023 & 0.4752 \\ -0.4752 & 0.4023 & 0.2334 & -0.7469 \\ -0.4023 & -0.4752 & 0.7469 & 0.2334 \end{bmatrix}$$

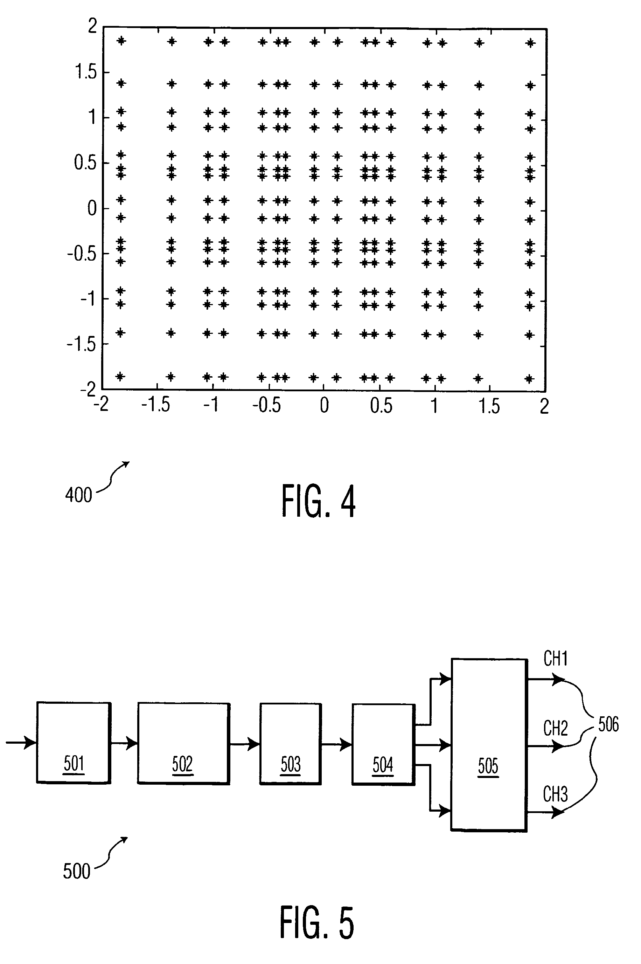

which spreads 4-QAM symbols into non-uniform 256-QAM symbols as illustrated in FIG. 4.
In a first preferred embodiment, all 4x4 integer rotation matrices for four QAM symbols are of the type:

$$I_{4,4} = \frac{1}{\sqrt{85}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1, x_2, x_3, x_4 \in \{\pm 1, \pm 2, \pm 4, \pm 8\}$ and their absolute value must be different from each other. For example, it can be

$$I_{4,4} = \frac{1}{\sqrt{85}} \begin{bmatrix} 8 & 4 & 2 & 1 \\ -4 & 8 & -1 & 2 \\ -2 & 1 & 8 & -4 \\ -1 & -2 & 4 & 8 \end{bmatrix}$$

which spreads 4-QAM symbols into regular 256-QAM symbols. Similarly, 4x4 integer spreading rotation matrices that can spread four 16-QAM symbols, four 64-QAM symbols and four 256-QAM symbols are obtained respectively as follows:

all 4x4 integer rotation matrices for 16-QAM symbols are of the type:

$$I_{16,4} = \frac{1}{\sqrt{4369}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1, x_2, x_3, x_4 \in \{\pm 1, \pm 4, \pm 16, \pm 64\}$ and their absolute value must be different from each other.
all 4x4 integer rotation matrices for 64-QAM symbols are of the type:

$$I_{64,4} = \frac{1}{\sqrt{266305}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1, x_2, x_3, x_4 \in \{\pm 1, \pm 8, \pm 64, \pm 512\}$ and their absolute value must be different from each other.
all 4x4 integer rotation matrices for 256-QAM symbols are of the type:

$$I_{256,4} = \frac{1}{\sqrt{16843009}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1, x_2, x_3, x_4 \in \{\pm 1, \pm 16, \pm 256, \pm 4096\}$ and their absolute value must be different from each other.

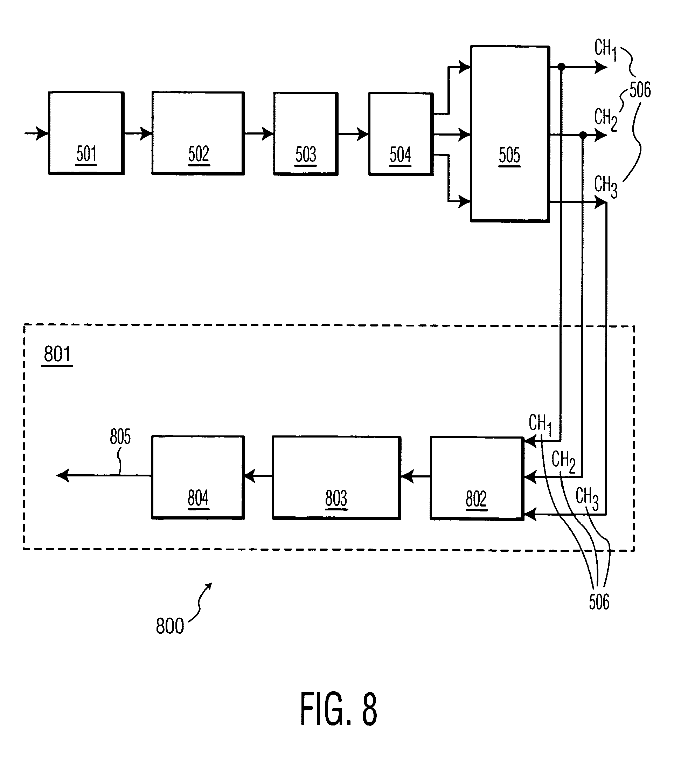

It needs to be mentioned that the performance difference of integer rotation matrices and real ones are very small, but the integer rotation matrix has much simpler computational complexity. To use these integer spreading rotation matrices, the input QAM symbols are multiplied with any of these matrices and then the output symbols from this multiplication are transmitted over different independent sub-channels. An example of a system 800 using a 3x3 rotation matrix and transmitting 500 and receiving 801 the rotated symbols over 3 independent sub-channels 506, is illustrated in FIG.8. An example of a transmitter using a 3x3 rotation matrix is illustrated in FIG. 5 and includes a spreading and rotation component 505 for multiplying the symbols by the spreading rotation 3x3 matrix.

A first embodiment of the present invention provides 2x2, 3x3, and 4x4 integer spreading rotation matrices that allow a communication system using QAM modulation to achieve high diversity while maintaining the same rate at lower computational complexity. One of the immediate applications is the next generation (Gigabit) Multi -Band OFDM UWB systems. The application of integer spreading rotation matrices of this invention allows a 1Gbps mode that has longer range compared to a prior art system. Further, the first embodiment makes the combination of spreading rotation techniques and MIMO transmission schemes possible to achieve higher diversity. That is, in the first preferred embodiment, a 2x2, 3x3, 4x4 set of integer rotation matrices is provided from the point of view that it is a linear modulation scheme over several independent channels for a single source-destination communication. This linear modulation scheme achieves higher order diversity due to the joint decoding of transmitted signals at the receiver.

However, if these integer spreading rotation matrices are considered as lattice codes, these spreading rotation matrices are equally applicable to a cooperative communication case, such as the single relay case illustrated in FIG. 1, or one having a plurality of relays. In a *second preferred embodiment* comprising a cooperative communication system, a spreading rotation 'mother' code is translated into a distributed modulation scheme wherein the source transmits the first component of rotated signals by multiplying the source signal using the first row of a rotation matrix obtained using the first embodiment. Then each relay receives and decodes the source's transmission and (if correct) remodulates the decoded signal by multiplying the decoded signal using another and pre-assigned row of the rotation matrix and forwards the remodulated signal (D-ReM-F). For example, assuming that the relay nodes are ordered by a 1-1 correspondence with the integers, relay 1 multiplies by row 2 and relay n multiplies by row n+1. The destination performs the joint decoding of all relayed signals. Because the link from each relay to the destination is independent of all others, the destination still enjoys the same diversity over several independent channels as in the single source-destination (no relay) case. The details of a decode-remodulate-forward scheme are developed in the following sections. The preferred second embodiment uses a pre -determined spreading rotation matrix to remodulate at the relay nodes by having each relay node use a different row such that no two relays use the same row.

Consider QAM-based modulation, which is commonly used in wireless communication systems. In a preferred embodiment for four bits $b_0b_1b_2b_3$ at the source, it is desired to modulate them into 16-QAM symbols. Typically, non-cooperative communication systems use the following Gra y-mapping:

$$ x = \begin{bmatrix} 2 & -1 & 2i & -i \end{bmatrix} \cdot \begin{bmatrix} 2b_0 - 1 \\ 2b_1 - 1 \\ 2b_2 - 1 \\ 2b_3 - 1 \end{bmatrix} $$

where x is a 16 - QAM symbol.

For the case of cooperative communication systems having one relay, if these four bits are decoded correctly at a relay node, the above mapping is not necessary for the relay to retransmit the forwarded symbol. In a preferred embodiment, the following mapping is used instead:

$$ \begin{bmatrix} x_s \\ x_r \end{bmatrix} = \begin{bmatrix} 2 & -1 & 2i & -i \\ 1 & 2 & i & 2i \end{bmatrix} \cdot \begin{bmatrix} 2b_0 - 1 \\ 2b_1 - 1 \\ 2b_2 - 1 \\ 2b_3 - 1 \end{bmatrix} $$

where $x_s$ is the modulated symbol for the source and $x_r$ is the modulated symbol for the relay.

Considering the signal constellation, it can be seen that the source symbol and relay symbol have different structures, which provides another kind of signal space diversity that is better than the repetition-based diversity. This is the motivation for the "decode-remodulate-and-forward" (D-ReM-F) of a second preferred embodiment, where remodulate means the relay uses different modulation than the source, in this case a row of a 'mother' spreading rotation matrix.

Similarly, in a preferred embodiment, if there are six bits $b_0b_1b_2b_3b_4b_5$ and it is desired to map them into 64-QAM symbols at the source and the relay, the following mapping is used:

$$\begin{bmatrix} x_s \\ x_r \end{bmatrix} = \begin{bmatrix} 4 & 2 & -1 & 4i & 2i & -i \\ -1 & 4 & 2 & -i & 4i & 2i \end{bmatrix} \cdot \begin{bmatrix} 2b_0 - 1 \\ 2b_1 - 1 \\ 2b_2 - 1 \\ 2b_3 - 1 \\ 2b_4 - 1 \\ 2b_5 - 1 \end{bmatrix}$$

where $x_s$ is the modulated symbol for the source and $x_r$ is the modulated symbol for the relay. If there are two relays, one more mapping can be done by the second relay

$$\begin{bmatrix} x_s \\ x_{r1} \\ x_{r2} \end{bmatrix} = \begin{bmatrix} 4 & 2 & -1 & 4i & 2i & -i \\ -1 & 4 & 2 & -i & 4i & 2i \\ 2 & -1 & 4 & 2i & -i & 4i \end{bmatrix} \cdot \begin{bmatrix} 2b_0 - 1 \\ 2b_1 - 1 \\ 2b_2 - 1 \\ 2b_3 - 1 \\ 2b_4 - 1 \\ 2b_5 - 1 \end{bmatrix}$$

where $x_s$ is the modulated symbol for the source, $x_{r1}$ is the modulated symbol for the first relay and $x_{r2}$ is the modulated symbol for the second relay.

However, for two bits with QSPK (4-QAM) transmission, because of the special signal constellation, the relay can either keep the same 4-QAM as the source or use a different one. It doesn't change the overall system performance.

$$\begin{bmatrix} x_s \\ x_r \end{bmatrix} = \begin{bmatrix} 1 & i \\ 1 & -i \end{bmatrix} \cdot \begin{bmatrix} 2b_0 - 1 \\ 2b_1 - 1 \end{bmatrix} \quad \text{or} \quad \begin{bmatrix} x_s \\ x_r \end{bmatrix} = \begin{bmatrix} 1 & i \\ 1 & i \end{bmatrix} \cdot \begin{bmatrix} 2b_0 - 1 \\ 2b_1 - 1 \end{bmatrix}$$

where $x_s$ is the modulated symbol for the source and $x_r$ is the modulated symbol for the relay.

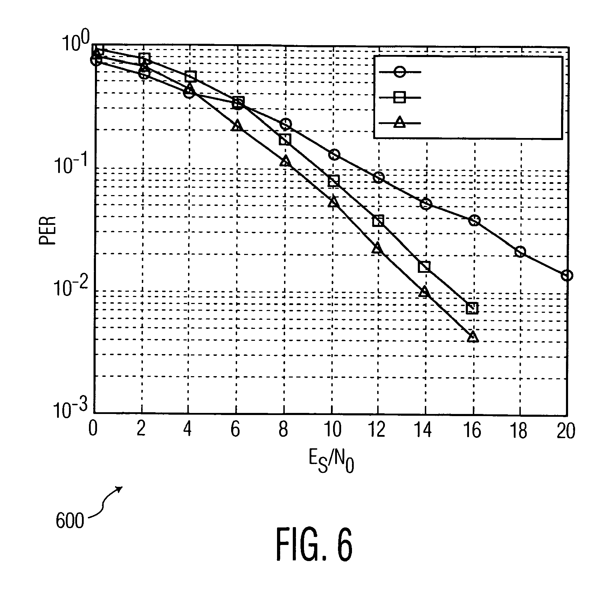

Simulation results are presented for the case of both block fading and fast fading. For the block fading case, the packet size is 130 bits, and is encoded by the (15.17) rate ½ convolution code and interleaved by a block interleaver. The distance between the source and relay is 0.1, the distance between the relay and destination is 0.9, and the distance between source and destination is 1. The 16-QAM performance of general repetition-based decode-forward (D-M-F) is compared with a preferred embodiment of decode-remodulate-forward (D-ReM-F) with direct QPSK transmission. It can be seen from FIG. 6 that both cooperative schemes surpass direct transmission, but the D-ReM-F has better PER performance than D-M-F, due to the modulation gain from signal space.

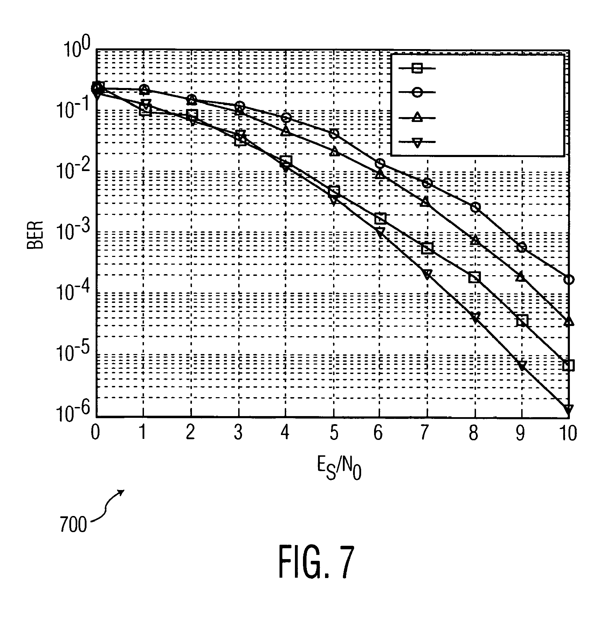

For the fast fading case, if the inter-user channel SNR is 20dB and they have equal distance to the destination, it can be seen from FIG. 7 that the general 16-QAM AF and repetition-based DF cannot be better than direct QPSK transmission. However, the proposed scheme (denoted by DMF in the figure) is better than direct QPSK transmission.

While the preferred embodiments of the present invention have been illustrated and described, it will be understood by those skilled in the art that the system, apparatus and methods as described herein are illustrative and various changes and modifications may be made and equivalents may be substitut ed for elements thereof without departing from the true scope of the present invention. In addition, many modifications may be made to adapt the teachings of the present invention to a particular situation without departing from its central scope. Therefore, it is intended that the present invention not be limited to the particular embodiments disclosed as the best mode contemplated for carrying out the present invention, but that the present invention include all embodiments falling within the scope of the claim appended hereto.

**Claims**

1. A system (800) for increasing diversity of a communication system using QAM modulation, comprising:

  a receiver (801) to receive and jointly decode $N$ spread QAM symbols received over $N$ different independent channels; and
  a transmitter (500) to spread and rotate $N$ QAM symbols and transmit the $N$ spread and rotated QAM symbols over N different independent channels,
wherein
the transmitter further comprises a spreading rotation component to spread and rotate each QAM symbol vector by multiplying by a pre-specified *NxN* integer spreading rotation matrix, **characterized by**
said pre-specified *NxN* integer spreading rotation matrix being orthogonal; having only positive or negative integer power-of-two entries that occur only once per row or per column and each column or row including one positive or negative one; and having a prefactor that is calculated as the reciprocal Euclidean norm of one row or column.

2. The system of claim 1, wherein the communication system is a multi-band orthogonal frequency division multiplexing ultra wide band, MB OFDM UWB, system.

3. The system of claim 1 or 2, wherein the pre-specified *NxN* integer spreading rotation matrix is the integer 2x2 integer spreading rotation matrix $I_{16,2} = \dfrac{1}{\sqrt{17}}\begin{bmatrix} 4 & 1 \\ 1 & -4 \end{bmatrix}$ which spreads 16-QAM symbols into regular 256-QAM symbols, and the 2x2 integer spreading rotation matrix that spreads 64-QAM symbols and 256-QAM symbols are

$$I_{64,2} = \frac{1}{\sqrt{65}}\begin{bmatrix} 8 & 1 \\ 1 & -8 \end{bmatrix} \text{ and } I_{256,2} = \frac{1}{\sqrt{257}}\begin{bmatrix} 16 & 1 \\ 1 & -16 \end{bmatrix} \text{ respectively.}$$

4. The system of claim 1 or 2, wherein the pre-specified *NxN* integer spreading rotation matrix is:

the integer 3x3 rotation matrix selected from the group of matrices consisting of

$$I_{4,3} = \frac{1}{\sqrt{21}}\begin{bmatrix} 4 & 2 & -1 \\ -1 & 4 & 2 \\ 2 & -1 & 4 \end{bmatrix}, \frac{1}{\sqrt{21}}\begin{bmatrix} 4 & -2 & 1 \\ 1 & 4 & -2 \\ -2 & 1 & 4 \end{bmatrix}$$

and any permutation of these two matrices between rows or columns, which spread 4-QAM symbols into regular 64-QAM symbols, and
the 3x3 integer spreading rotation matrices that can spread 16-QAM symbols, 64-QAM symbols and three 256-QAM symbols are, respectively selected from the respective group consisting of:

$$I_{16,3} = \frac{1}{\sqrt{273}}\begin{bmatrix} 16 & 4 & -1 \\ -1 & 16 & 4 \\ 4 & -1 & 16 \end{bmatrix}, \frac{1}{\sqrt{273}}\begin{bmatrix} 16 & -4 & 1 \\ 1 & 16 & -4 \\ -4 & 1 & 16 \end{bmatrix}$$

$$I_{64,3} = \frac{1}{\sqrt{4161}}\begin{bmatrix} 64 & 8 & -1 \\ -1 & 64 & 8 \\ 8 & -1 & 64 \end{bmatrix}, \frac{1}{\sqrt{4161}}\begin{bmatrix} 64 & -8 & 1 \\ 1 & 64 & -8 \\ -8 & 1 & 64 \end{bmatrix}$$

$$I_{256,3} = \frac{1}{\sqrt{65793}}\begin{bmatrix} 256 & 16 & -1 \\ -1 & 256 & 16 \\ 16 & -1 & 256 \end{bmatrix}, \frac{1}{\sqrt{65793}}\begin{bmatrix} 256 & -16 & 1 \\ 1 & 256 & -16 \\ -16 & 1 & 256 \end{bmatrix}$$

and any permutation of each above matrix between rows or columns.

**5.** The system of claim 1 or 2, wherein the *NxN* integer spreading rotation matrix is:

a 4x4 integer spreading matrix such that all 4x4 integer rotation matrices for four QAM symbols are of the type

$$I_{4,4} = \frac{1}{\sqrt{85}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1$, $x_2$, $x_3$, $x_4 \in \{\pm 1, \pm 2, \pm 4, \pm 8\}$ and their absolute value must be different from each other, and all 4x4 integer rotation matrices for 16-QAM symbols are of the type

$$I_{16,4} = \frac{1}{\sqrt{4369}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1$, $x_2$, $x_3$, $x_4 \in \{\pm 1, \pm 4, \pm 16, \pm 64\}$ and their absolute value must be different from each other, and all 4x4 integer rotation matrices for 64-QAM symbols are of the type

$$I_{64,4} = \frac{1}{\sqrt{266305}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1$, $x_2$, $x_3$, $x_4 \in \{\pm 1, \pm 8, \pm 64, \pm 512\}$ and their absolute value must be different from each other, and all 4x4 integer rotation matrices for 256-QAM symbols are of the type

$$I_{256,4} = \frac{1}{\sqrt{16843009}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1$, $x_2$, $x_3$, $x_4 \in \{\pm 1, \pm 16, \pm 256, \pm 4096\}$ and their absolute value must be different from each other.

**6.** The system of claim 5, wherein the 4x4 rotation matrix is an integer matrix given by

$$I_{4,4} = \frac{1}{\sqrt{85}} \begin{bmatrix} 8 & 4 & 2 & 1 \\ -4 & 8 & -1 & 2 \\ -2 & 1 & 8 & -4 \\ -1 & -2 & 4 & 8 \end{bmatrix}$$

which spreads 4-QAM symbols into regular 256-QAM symbols.

7. The system of claim 3, wherein:

the communication system is a cooperative communication system comprising a source node S, a single relay node R, and a destination node D; and
the 2x2 integer rotation matrix is used as a distributed modulation scheme in which a source node S multiplies a source signal by a first row of the integer rotation matrix and the relay node R receives and decodes the rotated signal and if correct, remodulates the decoded signal by multiplying the decoded signal by a second row of the integer rotation matrix and retransmits the remodulated rotated signal, and the destination node D performs joint decoding of all received signals.

8. The system of claim 4, wherein:

the communication system is a cooperative communication system comprising a source node S, two relay nodes $R_i$, and a destination node D; and
the 3x3 integer rotation matrix is used as a distributed modulation scheme in which a source node S multiplies a source signal by a first row of the integer rotation matrix, the relay nodes $R_i$ receive and decode the rotated signal and if correct, each remodulates the decoded signal by multiplying the decoded signal by a row of the 3x3 integer rotation matrix different for each of the relay nodes and source node, and each relay node retransmits the remodulated rotated signal, and the destination node D performs joint decoding of all received signals.

9. The system of claim 5, wherein:

the communication system is a cooperative communication system comprising a source node S, three relay nodes $R_i$, and a destination node D; and
the 4x4 integer rotation matrix is used as a distributed modulation scheme in which a source node S multiplies a source signal by a first row of the integer rotation matrix, the relay nodes $R_j$ receive and decode the rotated signal and if correct, each remodulates the decoded signal by multiplying the decoded signal by a row of the 4x4 integer rotation matrix different for each of the relay nodes and source node, and each relay node retransmits the remodulated rotated signal, and the destination node D performs joint decoding of all received signals.

10. The system of claim 6, wherein:

the communication system is a cooperative communication system comprising a source node S, three relay nodes $R_i$, and a destination node D; and
the 4x4 integer rotation matrix is used as a distributed modulation scheme in which a source node S multiplies a source signal by a first row of the integer rotation matrix, the relay nodes $R_i$ receive and decode the rotated signal and if correct, each remodulates the decoded signal by multiplying the decoded signal by a row of the 4x4 integer rotation matrix different for each of the relay nodes and source node, and each relay node retransmits the remodulated rotated signal, and the destination node D performs joint decoding of all received signals.

11. A method for increasing a diversity of a communication system using QAM modulation, comprising the steps of:

spreading and rotating $N$ QAM symbols by multiplication of each symbol by a pre-specified $NxN$ integer spreading rotation matrix $R$; and
transmitting the $N$ spread and rotated symbols over $N$ different independent channels, **characterized by** said pre-specified $NxN$ integer spreading rotation matrix being orthogonal; having only positive or negative integer power-of-two entries that occur only once per row or per column and each column or row including one positive or negative one; and having a prefactor that is calculated as the reciprocal Euclidean norm of one row or column.

12. The method of claim 11, wherein for a 2x2 matrix $R$ for 16-QAM symbols:

the 2x2 integer rotation matrix is

$$I_{16,2} = \frac{1}{\sqrt{17}} \begin{bmatrix} 4 & 1 \\ 1 & -4 \end{bmatrix}$$

which spreads 16-QAM symbols into regular 256-QAM symbols, and
the 2x2 integer spreading rotation matrix that spreads 64-QAM symbols and 256-QAM symbols are

$$I_{64,2} = \frac{1}{\sqrt{65}} \begin{bmatrix} 8 & 1 \\ 1 & -8 \end{bmatrix} \text{ and } I_{256,2} = \frac{1}{\sqrt{257}} \begin{bmatrix} 16 & 1 \\ 1 & -16 \end{bmatrix} \text{ respectively.}$$

**13.** The method of claim 11, wherein for a 3x3 matrix R for 4-QAM symbols:

the 3x3 integer rotation matrix is selected from the group of matrices consisting of

$$I_{4,3} = \frac{1}{\sqrt{21}} \begin{bmatrix} 4 & 2 & -1 \\ -1 & 4 & 2 \\ 2 & -1 & 4 \end{bmatrix}, \frac{1}{\sqrt{21}} \begin{bmatrix} 4 & -2 & 1 \\ 1 & 4 & -2 \\ -2 & 1 & 4 \end{bmatrix}$$

and any permutation of these two matrices between rows or columns, which spread 4-QAM symbols into regular 64-QAM symbols, and
the 3x3 integer spreading rotation matrix that spreads 16-QAM symbols, 64-QAM symbols and three 256-QAM symbols are respectively

$$I_{16,3} = \frac{1}{\sqrt{273}} \begin{bmatrix} 16 & 4 & -1 \\ -1 & 16 & 4 \\ 4 & -1 & 16 \end{bmatrix}, \frac{1}{\sqrt{273}} \begin{bmatrix} 16 & -4 & 1 \\ 1 & 16 & -4 \\ -4 & 1 & 16 \end{bmatrix}$$

$$I_{64,3} = \frac{1}{\sqrt{4161}} \begin{bmatrix} 64 & 8 & -1 \\ -1 & 64 & 8 \\ 8 & -1 & 64 \end{bmatrix}, \frac{1}{\sqrt{4161}} \begin{bmatrix} 64 & -8 & 1 \\ 1 & 64 & -8 \\ -8 & 1 & 64 \end{bmatrix}$$

**14.** The method of claim 11, wherein for a 4x4 matrix R for QAM symbols, the matrix R is
all 4x4 integer rotation matrices for four QAM symbols are of the type

$$I_{4,4} = \frac{1}{\sqrt{85}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1, x_2, x_3, x_4 \in \{\pm1, \pm2, \pm4, \pm8\}$ and their absolute value must be different from each other, and
all 4x4 integer rotation matrices for 16-QAM symbols are of the type

$$I_{16,4} = \frac{1}{\sqrt{4369}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1$, $x_2$, $x_3$, $x_4 \in \{\pm 1, \pm 4, \pm 16, \pm 64\}$ and their absolute value must be different from each other, and all 4x4 integer rotation matrices for 64-QAM symbols are of the type

$$I_{64,4} = \frac{1}{\sqrt{266305}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1$, $x_2$, $x_3$, $x_4 \in \{\pm 1, \pm 8, \pm 64, \pm 512\}$ and their absolute value must be different from each other, and all 4x4 integer rotation matrices for 256-QAM symbols are of the type

$$I_{256,4} = \frac{1}{\sqrt{16843009}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

where $x_1$, $x_2$, $x_3$, $x_4 \in \{\pm 1, \pm 16, \pm 256, \pm 4096\}$ and their absolute value must be different from each other.

15. A transmitter (500) for increasing a diversity of a communication system using QAM modulation, comprising:

means to spread and rotate $N$ QAM symbols; and
an allocation component to allocate the $N$ spread and rotated QAM symbols over $N$ different independent channels for transmission thereover,
wherein the transmitter further comprises a spreading rotation component to spread and rotate each QAM symbol vector by multiplying by a pre-specified $NxN$ integer spreading rotation matrix, **characterized by** said pre-specified $NxN$ integer spreading rotation matrix being orthogonal; having only positive or negative integer power-of-two entries that occur only once per row or per column and each column or row including positive or negative one; and having a prefactor that is calculated as the reciprocal Euclidean norm of one row or column.

**Patentansprüche**

1. System (800) zur Erhöhung der Diversität eines Kommunikationssystems unter Verwendung von QAM-Modulation, umfassend:

einen Empfänger (801), um über $N$ verschiedene unabhängige Kanäle empfangene $N$ gespreizte QAM-Symbole zu empfangen und zusammen zu decodieren; sowie
einen Sender (500), um N QAM-Symbole zu spreizen und zu drehen und die $N$ gespreizten und gedrehten QAM-Symbole über $N$ verschiedene unabhängige Kanäle zu übertragen,
wobei
der Sender weiterhin eine spreizende Rotationskomponente umfasst, um jeden QAM-Symbol-Vektor durch Multiplizieren mit einer vorher spezifizierten ganzzahligen $NxN$ Spreiz-Rotationsatrix zu spreizen und zu drehen, **dadurch gekennzeichnet, dass** die vorher spezifizierte ganzzahlige $NxN$ Spreiz-Rotationsmatrix orthogonal ist; mit nur positiven oder negativen ganzzahligen Zweierpotenz-Einträgen, die nur einmal je Zeile oder je Spalte auftreten, wobei jede Spalte oder Zeile einen positiven oder negativen Eintrag enthält; sowie mit einem Vorfaktor, der als die reziproke euklidische Norm einer Zeile oder Spalte berechnet wird.

**2.** System nach Anspruch 1, wobei das Kommunikationssystem ein Muilti-Band Orthogonal Frequency Division Multiplexing Ultra Wide Band, MB OFDM UWB-, System ist.

**3.** System nach Anspruch 1 oder 2, wobei die vorher spezifizierte ganzzahlige *NxN* Spreiz-Rotationsmatrix die ganzzahlige 2x2 Spreiz-Rotationsmatrix

$$I_{16.2} = \frac{1}{\sqrt{17}}\begin{vmatrix} 4 & 1 \\ 1 & -4 \end{vmatrix}$$ ist, die 16-QAM-Symbole in regelmäßige 256-QAM-Symbole spreizt, und die ganzzahlige 2x2 Spreiz-Rotationsmatrix, die 64-QAM-Symbole und 256-QAM-Symbole spreizt,

$$I_{64.2} = \frac{1}{\sqrt{65}}\begin{vmatrix} 8 & 1 \\ 1 & -8 \end{vmatrix}$$ beziehungsweise $$I_{256.2} = \frac{1}{\sqrt{257}}\begin{vmatrix} 16 & 1 \\ 1 & -16 \end{vmatrix}$$

ist.

**4.** System nach Anspruch 1 oder 2, wobei die vorher spezifizierte ganzzahlige *NxN* Spreiz-Rotationsmatrix ist:

die ganzzahlige 3x3 Rotationsmatrix, ausgewählt aus der Gruppe von Matrizen, bestehend aus:

$$I_{4,3} = \frac{1}{\sqrt{21}}\begin{bmatrix} 4 & 2 & -1 \\ -1 & 4 & 2 \\ 2 & -1 & 4 \end{bmatrix}, \frac{1}{\sqrt{21}}\begin{bmatrix} 4 & -2 & 1 \\ 1 & 4 & -2 \\ -2 & 1 & 4 \end{bmatrix}$$

sowie einer Permutation dieser beiden Matrrizes zwischen Zeilen oder Spalten, die 4-QAM-Symbole in regelmäßige 64-QAM-Symbole spreizen, und
wobei die ganzzahlige 3x3 Spreiz-Rotationsmatrizes, die 16-QAM-Symbole, 64-QAM-Symbole sowie drei 256-QAM-Symbole spreizen können, jeweils aus der jeweiligen Gruppe ausgewählt werden, bestehend aus:

$$I_{16,3} = \frac{1}{\sqrt{273}}\begin{bmatrix} 16 & 4 & -1 \\ -1 & 16 & 4 \\ 4 & -1 & 16 \end{bmatrix}, \frac{1}{\sqrt{273}}\begin{bmatrix} 16 & -4 & 1 \\ 1 & 16 & -4 \\ -4 & 1 & 16 \end{bmatrix}$$

$$I_{64,3} = \frac{1}{\sqrt{4161}}\begin{bmatrix} 64 & 8 & -1 \\ -1 & 64 & 8 \\ 8 & -1 & 64 \end{bmatrix}, \frac{1}{\sqrt{4161}}\begin{bmatrix} 64 & -8 & 1 \\ 1 & 64 & -8 \\ -8 & 1 & 64 \end{bmatrix}$$

$$I_{256,3} = \frac{1}{\sqrt{65793}}\begin{bmatrix} 256 & 16 & -1 \\ -1 & 256 & 16 \\ 16 & -1 & 256 \end{bmatrix}, \frac{1}{\sqrt{65793}}\begin{bmatrix} 256 & -16 & 1 \\ 1 & 256 & -16 \\ -16 & 1 & 256 \end{bmatrix}$$

sowie einer Permutation jeder obigen Matrix zwischen Zeilen oder Spalten.

**5.** System nach Anspruch 1 oder 2, wobei die ganzzahlige *NxN* Spreiz-Rotationsmatrix ist:

eine ganzzahlige 4x4 Spreizmatrix, so dass alle ganzzahligen 4x4 Rotationsmatrizes für vier QAM-Symbole vom Typ

$$I_{4,4} = \frac{1}{\sqrt{85}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

sind, wobei $x_1, x_2, x_3, x_4 \in \{\pm 1, \pm 2, \pm 4, \pm 8\}$ und ihr absoluter Wert voneinander verschieden sein müssen, und alle ganzzahligen 4x4 Rotationsmatrizes für 16-QAM-Symbole vom Typ

$$I_{16,4} = \frac{1}{\sqrt{4369}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

sind, wobei $x_1, x_2, x_3, x_4 \in \{\pm 1, \pm 4, \pm 16, \pm 64\}$ und ihr absoluter Wert voneinander verschieden sein müssen, und alle ganzzahligen 4x4 Rotationsmatrizes für 64-QAM-Symbole vom Typ

$$I_{64,4} = \frac{1}{\sqrt{266305}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

sind, wobei $x_1, x_2, x_3, x_4 \in \{\pm 1, \pm 8, \pm 64, \pm 512\}$ und ihr absoluter Wert voneinander verschieden sein müssen, und alle ganzzahligen 4x4 Rotationsmatrizes für 256-QAM-Symbole vom Typ

$$I_{256,4} = \frac{1}{\sqrt{16843009}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

sind, wobei $x_1, x_2, x_3, x_4 \in \{\pm 1, \pm 16, \pm 256, \pm 4096\}$ und ihr absoluter Wert voneinander verschieden sein müssen.

**6.** System nach Anspruch 5, wobei die 4x4 Rotationsmatrix eine ganzzahlige Matrix ist, vorgegeben durch

$$I_{4,4} = \frac{1}{\sqrt{85}} \begin{bmatrix} 8 & 4 & 2 & 1 \\ -4 & 8 & -1 & 2 \\ -2 & 1 & 8 & -4 \\ -1 & -2 & 4 & 8 \end{bmatrix}$$

die 4-QAM-Symbole in regelmäßige 256-QAM-Symbole spreizt.

7. System nah Anspruch 3,
   wobei das Kommunikationssystem ein kooperatives Kommunikationssystem mit einem Quellknoten S, einem Einzelrelaisknoten R sowie einem Zielknoten D ist; und
   die ganzzahlige 2x2 Rotationsmatrix als ein verteiltes Modulationsschema verwendet wird, in dem ein Quellknoten S ein Quellsignal mit einer ersten Zeile der ganzzahligen Rotationsmatrix multipliziert und der Relaisknoten R das gedrehte Signal empfängt und decodiert und, wenn korrekt, das decodierte Signal durch Multiplizieren des decodierten Signals mit einer zweiten Zeile der ganzzahligen Rotationsmatrix remoduliert und das remodulierte, gedrehte Signal erneut überträgt, und der Zielknoten D eine gemeinsame Decodierung aller empfangenen Signale durchführt.

8. System nach Anspruch 4, wobei:

   das Kommunikationssystem ein kooperatives Kommunikationssystem mit einem Quellknoten S, zwei Relaisknoten $R_i$ sowie einem Zielknoten D ist; und
   die ganzzahlige 3x3 Rotationsmatrix als ein verteiltes Modulationsschema verwendet wird, in dem ein Quellknoten S ein Quellsignal mit einer ersten Zeile der ganzzahligen Rotationsmatrix multipliziert, die Relaisknoten $R_i$ das gedrehte Signal empfangen und decodieren und, wenn korrekt, jeder das decodierte Signal durch Multiplizieren des decodierten Signals mit einer Zeile der ganzzahligen 3x3 Rotationsmatrix für jeden der Relaisknoten und den Quellknoten unterschiedlich remoduliert, und jeder Relaisknoten das remodulierte, gedrehte Signal erneut überträgt, und der Zielknoten D eine gemeinsame Decodierung aller empfangenen Signale durchführt.

9. System nach Anspruch 5, wobei:

   das Kommunikationssystem ein kooperatives Kommunikationssystem mit einem Quellknoten S, drei Relaisknoten $R_i$ sowie einem Zielknoten D ist; und
   die ganzzahlige 4x4 Rotationsmatrix als ein verteiltes Modulationsschema verwendet wird, in dem ein Quellknoten S ein Quellsignal mit einer ersten Zeile der ganzzahligen Rotationsmatrix multipliziert, die Relaisknoten $R_i$ das gedrehte Signal empfangen und decodieren und, wenn korrekt, jeder das decodierte Signal durch Multiplizieren des decodierten Signals mit einer Zeile der ganzzahligen 4x4 Rotationsmatrix für jeden der Relaisknoten und den Quellknoten unterschiedlich remoduliert, und jeder Relaisknoten das remodulierte, gedrehte Signal erneut überträgt, und der Zielknoten D eine gemeinsame Decodierung aller empfangenen Signale durchführt.

10. System nach Anspruch 6, wobei:

    das Kommunikationssystem ein kooperatives Kommunikationssystem mit einem Quellknoten S, drei Relaisknoten $R_i$ sowie einem Zielknoten D ist; und
    die ganzzahlige 4x4 Rotationsmatrix als ein verteiltes Modulationsschema verwendet wird, in dem ein Quellknoten S ein Quellsignal mit einer ersten Zeile der ganzzahligen Rotationsmatrix multipliziert, die Relaisknoten $R_i$ das gedrehte Signal empfangen und decodieren und, wenn korrekt, jeder das decodierte Signal durch Multiplizieren des decodierten Signals mit einer Zeile der ganzzahligen 4x4 Rotationsmatrix für jeden der Relaisknoten und den Quellknoten unterschiedlich remoduliert, und jeder Relaisknoten das remodulierte, gedrehte Signal erneut überträgt, und der Zielknoten D eine gemeinsame Decodierung aller empfangenen Signale durchführt.

11. Verfahren zur Erhöhung der Diversität eines Kommunikationssystems unter Verwendung von QAM-Modulation, das die folgenden Schritte umfasst, wonach:

    N QAM-Symbole durch Multiplizieren jedes Symbols mit einer vorher spezifizierten ganzzahligen *NxN* Spreiz-Rotationsmatrix R gespreizt und gedreht werden; und
    die *N* gespreizten und gedrehten Symbole über *N* verschiedene unabhängige Kanäle übertragen werden,
    **dadurch gekennzeichnet, dass**
    die vorher spezifizierte ganzzahlige *NxN* Spreiz-Rotationsmatrix orthogonal ist; mit nur positiven oder negativen ganzzahligen Zweierpotenz-Einträgen, die nur einmal je Zeile oder je Spalte auftreten, wobei jede Spalte oder Zeile einen positiven oder negativen Eintrag enthält; sowie mit einem Vorfaktor, der als die reziproke euklidische Norm einer Zeile oder Spalte berechnet wird.

**12.** Verfahren nach Anspruch 11, wobei für eine 2x2 Matrix R für 16-QAM-Symbole:

die ganzzahlige 2x2 Rotationsmatrix

$$I_{16.2} = \frac{1}{\sqrt{17}} \begin{vmatrix} 4 & 1 \\ 1 & -4 \end{vmatrix}$$

ist, die 16-QAM-Symbole in regelmäßige 256-QAM-Symbole spreizt, und
die ganzzahlige 2x2 Spreiz-Rotationsmatrix, die 64-QAM-Symbole und 256-QAM-Symbole spreizt,

$$I_{64.2} = \frac{1}{\sqrt{65}} \begin{vmatrix} 8 & 1 \\ 1 & -8 \end{vmatrix} \quad \text{beziehungsweise} \quad I_{256.2} = \frac{1}{\sqrt{257}} \begin{vmatrix} 16 & 1 \\ 1 & -16 \end{vmatrix} \text{ ist.}$$

**13.** Verfahren nach Anspruch 11, wobei für eine 3x3 Matrix R für 4-QAM-Symbole:

die ganzzahlige 3x3 Rotationsmatrix aus der Gruppe von Matrizen ausgewählt wird, bestehend aus:

$$I_{4,3} = \frac{1}{\sqrt{21}} \begin{bmatrix} 4 & 2 & -1 \\ -1 & 4 & 2 \\ 2 & -1 & 4 \end{bmatrix}, \frac{1}{\sqrt{21}} \begin{bmatrix} 4 & -2 & 1 \\ 1 & 4 & -2 \\ -2 & 1 & 4 \end{bmatrix}$$

sowie einer Permutation dieser beiden Matrrizes zwischen Zeilen oder Spalten, die 4-QAM-Symbole in regelmäßige 64-QAM-Symbole spreizen, und
wobei die ganzzahlige 3x3 Spreiz-Rotationsmatrix, die 16-QAM-Symbole, 64-QAM-Symbole sowie drei 256-QAM-Symbole spreizt,

$$I_{16,3} = \frac{1}{\sqrt{273}} \begin{bmatrix} 16 & 4 & -1 \\ -1 & 16 & 4 \\ 4 & -1 & 16 \end{bmatrix}, \frac{1}{\sqrt{273}} \begin{bmatrix} 16 & -4 & 1 \\ 1 & 16 & -4 \\ -4 & 1 & 16 \end{bmatrix}$$

$$I_{64,3} = \frac{1}{\sqrt{4161}} \begin{bmatrix} 64 & 8 & -1 \\ -1 & 64 & 8 \\ 8 & -1 & 64 \end{bmatrix}, \frac{1}{\sqrt{4161}} \begin{bmatrix} 64 & -8 & 1 \\ 1 & 64 & -8 \\ -8 & 1 & 64 \end{bmatrix}$$

ist.

**14.** Verfahren nach Anspruch 11, wobei für eine 4x4 Matrix *R* für QAM-Symbole die Matrix *R* so ist, dass alle ganzzahligen 4x4 Rotationsmatrizes für vier QAM-Symbole vom Typ

$$I_{4,4} = \frac{1}{\sqrt{85}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

sind, wobei $x_1, x_2, x_3, x_4 \in \{\pm 1, \pm 2, \pm 4, \pm 8\}$ und ihr absoluter Wert voneinander verschieden sein müssen, und alle ganzzahligen 4x4 Rotationsmatrizes für 16-QAM-Symbole vom Typ

$$I_{16,4} = \frac{1}{\sqrt{4369}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

sind, wobei $x_1, x_2, x_3, x_4 \in \{\pm 1, \pm 4, \pm 16, \pm 64\}$ und ihr absoluter Wert voneinander verschieden sein müssen, und alle ganzzahligen 4x4 Rotationsmatrizes für 64-QAM-Symbole vom Typ

$$I_{64,4} = \frac{1}{\sqrt{266305}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

sind, wobei $x_1, x_2, x_3, x_4 \in \{\pm 1, \pm 8, \pm 64, \pm 512\}$ und ihr absoluter Wert voneinander verschieden sein müssen, und alle ganzzahligen 4x4 Rotationsmatrizes für 256-QAM-Symbole vom Typ

$$I_{256,4} = \frac{1}{\sqrt{16843009}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

sind, wobei $x_1, x_2, x_3, x_4 \in \{\pm 1, \pm 16, \pm 256, \pm 4096\}$ und ihr absoluter Wert voneinander verschieden sein müssen.

15. Sender (500) zur Erhöhung einer Diversität eines Kommunikatonssystems unter Verwendung von QAM-Modulaton, umfassend:

Mittel zum Spreizen und Drehen von *N* QAM-Symbolen; sowie
eine Zuordnungskomponente, um die *N* gespreizten und gedrehten QAM-Symbole über *N* verschiedene unabhängige Kanäle zur Übertragung über diese zuzuordnen,
wobei der Sender weiterhin eine Spreiz-Rotationskomponente umfasst, um jeden QAM-Symbolvektor durch Multiplizieren mit einer vorher spezifizierten ganzzahligen *NxN* Spreiz-Rotationsmatrix zu spreizen und zu drehen,
**dadurch gekennzeichnet, dass**
die vorher spezifizierte ganzzahlige *NxN* Spreiz-Rotationsmatrix orthogonal ist; mit nur positiven oder negativen ganzzahligen Zweierpotenz-Einträgen, die nur einmal je Zeile oder je Spalte auftreten, wobei jede Spalte oder Zeile einen positiven oder negativen Eintrag enthält; sowie mit einem Vorfaktor, der als die reziproke euklidische Norm einer Zeile oder Spalte berechnet wird.

**Revendications**

1. Système (800) pour augmenter une diversité d'un système de communication utilisant la modulation QAM, comprenant :

un récepteur (801) pour recevoir et décoder conjointement *N* symboles QAM étalés reçus sur N canaux indépendants différents ; et

un émetteur (500) pour étaler et mettre en rotation *N* symboles QAM et émettre les *N* symboles QAM étalés et mis en rotation sur *N* canaux indépendants différents, dans lequel

l'émetteur comprend en outre un composant de rotation d'étalement pour étaler et mettre en rotation chaque vecteur de symbole QAM par multiplication par une matrice pré-spécifiée de rotation d'étalement de *N*x*N* nombres entiers,

**caractérisé en ce que**

ladite matrice pré-spécifiée de rotation d'étalement de *N*x*N* nombres entiers est orthogonale ; possède seulement des entrées positives ou négatives à la puissance deux de nombres entiers qui se produisent seulement une fois par rangée ou par colonne et chaque colonne ou rangée comprend au moins une positive ou une négative ; et possède un pré-facteur qui est calculé sous forme de norme euclidienne réciproque d'une rangée ou colonne.

2. Système selon la revendication 1, dans lequel le système de communication est un système à multi-bande à multiplexage par répartition orthogonale de la fréquence à bande ultralarge, MB OFDM UWB.

3. Système selon la revendication 1 ou 2, dans lequel la matrice pré-spécifiée de rotation d'étalement de *N*x*N* nombres entiers est la matrice de rotation d'étalement de nombres entiers 2x2

$$I_{16,2} = \frac{1}{\sqrt{17}} \begin{bmatrix} 4 & 1 \\ 1 & -4 \end{bmatrix}$$

qui étale des symboles 16-QAM en symboles réguliers 256-QAM, et la matrice de rotation d'étalement de nombres entiers 2x2 qui étale des symboles 64-QAM et des symboles 256-QAM est

$$I_{64,2} = \frac{1}{\sqrt{65}} \begin{bmatrix} 8 & 1 \\ 1 & -8 \end{bmatrix} \text{ et } I_{256,2} = \frac{1}{\sqrt{257}} \begin{bmatrix} 16 & 1 \\ 1 & -16 \end{bmatrix} \text{ respectivement.}$$

4. Système selon la revendication 1 ou 2, dans lequel la matrice pré-spécifiée de rotation d'étalement de *N*x*N* nombres entiers est :

la matrice de rotation de nombres entiers 3x3 sélectionnée parmi le groupe de matrices constitué de

$$I_{4,3} = \frac{1}{\sqrt{21}} \begin{bmatrix} 4 & 2 & -1 \\ -1 & 4 & 2 \\ 2 & -1 & 4 \end{bmatrix}, \frac{1}{\sqrt{21}} \begin{bmatrix} 4 & -2 & 1 \\ 1 & 4 & -2 \\ -2 & 1 & 4 \end{bmatrix}$$

et une quelconque permutation de ces deux matrices entre des rangées ou colonnes, qui étalent des symboles 4-QAM en symboles réguliers 64-QAM, et

les matrices d'étalement de rotation de nombres entiers 3x3 qui peuvent étaler des symboles 16-QAM, des symboles 64-QAM et trois symboles 256-QAM sont, respectivement, sélectionnées parmi le groupe respectif constitué de :

$$I_{16,3} = \frac{1}{\sqrt{273}} \begin{bmatrix} 16 & 4 & -1 \\ -1 & 16 & 4 \\ 4 & -1 & 16 \end{bmatrix}, \frac{1}{\sqrt{273}} \begin{bmatrix} 16 & -4 & 1 \\ 1 & 16 & -4 \\ -4 & 1 & 16 \end{bmatrix}$$

$$I_{64,3} = \frac{1}{\sqrt{4161}}\begin{bmatrix} 64 & 8 & -1 \\ -1 & 64 & 8 \\ 8 & -1 & 64 \end{bmatrix}, \frac{1}{\sqrt{4161}}\begin{bmatrix} 64 & -8 & 1 \\ 1 & 64 & -8 \\ -8 & 1 & 64 \end{bmatrix}$$

$$I_{256,3} = \frac{1}{\sqrt{65793}}\begin{bmatrix} 256 & 16 & -1 \\ -1 & 256 & 16 \\ 16 & -1 & 256 \end{bmatrix}, \frac{1}{\sqrt{65793}}\begin{bmatrix} 256 & -16 & 1 \\ 1 & 256 & -16 \\ -16 & 1 & 256 \end{bmatrix}$$

et une quelconque permutation de chaque matrice ci-dessus entre des rangées ou colonnes.

5. Système selon la revendication 1 ou 2, dans lequel la matrice de rotation d'étalement de nombres entiers $N$x$N$ est :

une matrice d'étalement de nombres entiers 4x4 telle que toutes les matrices de rotation de nombres entiers 4x4 pour quatre symboles QAM sont du type

$$I_{4,4} = \frac{1}{\sqrt{85}}\begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

où $x_1$, $x_2$, $x_3$, $x_4 \in \{\pm 1, \pm 2, \pm 4, \pm 8\}$ et leur valeur absolue doivent être différents l'un de l'autre, et toutes les matrices de rotation de nombres entiers 4x4 pour des symboles 16-QAM sont du type

$$I_{16,4} = \frac{1}{\sqrt{4369}}\begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

où $x_1$, $x_2$, $x_3$, $x_4 \in \{\pm 1, \pm 4, \pm 16, \pm 64\}$ et leur valeur absolue doivent être différents l'un de l'autre, et toutes les matrices de rotation de nombres entiers 4x4 pour des symboles 64-QAM sont du type

$$I_{64,4} = \frac{1}{\sqrt{266305}}\begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

où $x_1$, $x_2$, $x_3$, $x_4 \in \{\pm 1, \pm 8, \pm 64, \pm 512\}$ et leur valeur absolue doivent être différents l'un de l'autre, et toutes les matrices de rotation de nombres entiers 4x4 pour des symboles 256-QAM sont du type

$$I_{256,4} = \frac{1}{\sqrt{16843009}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

où $x_1$, $x_2$, $x_3$, $x_4 \in \{\pm 1, \pm 16, \pm 256, \pm 4096\}$ et leur valeur absolue doivent être différents l'un de l'autre.

6.  Système selon la revendication 5, dans lequel la matrice de rotation 4x4 est une matrice de nombres entiers donnée par

$$I_{4,4} = \frac{1}{\sqrt{85}} \begin{bmatrix} 8 & 4 & 2 & 1 \\ -4 & 8 & -1 & 2 \\ -2 & 1 & 8 & -4 \\ -1 & -2 & 4 & 8 \end{bmatrix}$$

qui étale des symboles 4-QAM en symboles réguliers 256-QAM.

7.  Système selon la revendication 3, dans lequel :

    le système de communication est un système de communication coopérative comprenant un noeud source S, un seul noeud relais $R_i$, et un noeud de destination D ; et
    la matrice de rotation de nombres entiers 2x2 est utilisée en tant que système de modulation distribuée, dans lequel un noeud source S multiplie un signal source par une première rangée de la matrice de rotation de nombres entiers et le noeud de relais $R_i$ reçoit et décode le signal mis en rotation et, s'il est correct, remodule le signal décodé en multipliant le signal décodé par une deuxième rangée de la matrice de rotation de nombres entiers et retransmet le signal mis en rotation remodulé, et le noeud de destination D réalise un décodage conjoint de tous les signaux reçus.

8.  Système selon la revendication 4, dans lequel :

    le système de communication est un système de communication coopérative comprenant un noeud source S, deux noeuds de relais $R_i$, et un noeud de destination D ; et
    la matrice de rotation de nombres entiers 3x3 est utilisée en tant que système de modulation distribuée, dans lequel un noeud source S multiplie un signal source par une première rangée de la matrice de rotation de nombres entiers, les noeuds de relais $R_i$ reçoivent et décodent le signal mis en rotation et, s'il est correct, chacun remodule le signal décodé en multipliant le signal décodé par une rangée de la matrice de rotation de nombres entiers 3x3 différente pour chacun des noeuds de relais et du noeud source, et chaque noeud de relais retransmet le signal mis en rotation remodulé, et le noeud de destination D réalise un décodage conjoint de tous les signaux reçus.

9.  Système selon la revendication 5, dans lequel :

    le système de communication est un système de communication coopérative comprenant un noeud source S, trois noeuds de relais $R_i$, et un noeud de destination D ; et
    la matrice de rotation de nombres entiers 4x4 est utilisée en tant que système de modulation distribuée, dans lequel un noeud source S multiplie un signal source par une première rangée de la matrice de rotation de nombres entiers, les noeuds de relais $R_i$ reçoivent et décodent le signal mis en rotation et, s'il est correct, chacun remodule le signal décodé en multipliant le signal décodé par une rangée de la matrice de rotation de nombres entiers 4x4 différente pour chacun des noeuds de relais et du noeud source, et chaque noeud de relais retransmet le signal mis en rotation remodulé, et le noeud de destination D réalise un décodage conjoint de tous les signaux reçus.

**10.** Système selon la revendication 6, dans lequel :

le système de communication est un système de communication coopérative comprenant un noeud source S, trois noeuds de relais $R_i$, et un noeud de destination D ; et

la matrice de rotation de nombres entiers 4x4 est utilisée en tant que système de modulation distribuée, dans lequel un noeud source S multiplie un signal source par une première rangée de la matrice de rotation de nombres entiers, les noeud de relais $R_i$ reçoivent et décodent le signal mis en rotation et, s'il est correct, chacun remodule le signal décodé en multipliant le signal décodé par une rangée de la matrice de rotation de nombres entiers 4x4 différente pour chacun des noeuds de relais et du noeud source, et chaque noeud de relais retransmet le signal mis en rotation remodulé, et le noeud de destination D réalise un décodage conjoint de tous les signaux reçus.

**11.** Procédé pour augmenter une diversité d'un système de communication utilisant la modulation QAM, comprenant les étapes de :

l'étalement et la rotation de $N$ symboles QAM par multiplication de chaque symbole par une matrice pré-spécifiée de rotation d'étalement de $N$x$N$ nombres entiers $R$ ; et

la transmission des $N$ symboles étalés et mis en rotation sur $N$ canaux indépendants différents,

**caractérisé en ce que**

ladite matrice pré-spécifiée de rotation d'étalement de $N$x$N$ nombres entiers est orthogonale ; possède seulement des entrées positives ou négatives à la puissance deux de nombres entiers qui se produisent seulement une fois par rangée ou par colonne et chaque colonne ou rangée comprend au moins une positive ou une négative ; et possède un pré-facteur qui est calculé sous forme de norme euclidienne réciproque d'une rangée ou colonne.

**12.** Procédé selon la revendication 11, dans lequel pour une matrice 2x2 R pour des symboles 16-QAM :

la matrice de rotation de nombres entiers 2x2 est

$$I_{16,2} = \frac{1}{\sqrt{17}} \begin{bmatrix} 4 & 1 \\ 1 & -4 \end{bmatrix}$$

qui étale des symboles 16-QAM en symboles réguliers 256-QAM, et

la matrice de rotation d'étalement de nombres entiers 2x2 qui étale des symboles 64-QAM et symboles 256-QAM est

$$I_{64,2} = \frac{1}{\sqrt{65}} \begin{bmatrix} 8 & 1 \\ 1 & -8 \end{bmatrix} \text{ et } I_{256,2} = \frac{1}{\sqrt{257}} \begin{bmatrix} 16 & 1 \\ 1 & -16 \end{bmatrix} \text{ respectivement}$$

**13.** Procédé selon la revendication 11, dans lequel pour une matrice 3x3 R pour des symboles 4-QAM :

la matrice de rotation de nombres entiers 3x3 est sélectionnée parmi le groupe de matrices constitué de

$$I_{4,3} = \frac{1}{\sqrt{21}} \begin{bmatrix} 4 & 2 & -1 \\ -1 & 4 & 2 \\ 2 & -1 & 4 \end{bmatrix}, \frac{1}{\sqrt{21}} \begin{bmatrix} 4 & -2 & 1 \\ 1 & 4 & -2 \\ -2 & 1 & 4 \end{bmatrix}$$

et une quelconque permutation de ces deux matrices entre des rangées ou colonnes, qui étalent des symboles 4-QAM en symboles réguliers 64-QAM, et

la matrice de rotation d'étalement de nombres entiers 3x3 qui étale des symboles 16-QAM, des symboles 64-QAM et trois symboles 256-QAM est respectivement

$$I_{16,3} = \frac{1}{\sqrt{273}}\begin{bmatrix} 16 & 4 & -1 \\ -1 & 16 & 4 \\ 4 & -1 & 16 \end{bmatrix}, \frac{1}{\sqrt{273}}\begin{bmatrix} 16 & -4 & 1 \\ 1 & 16 & -4 \\ -4 & 1 & 16 \end{bmatrix}$$

$$I_{64,3} = \frac{1}{\sqrt{4161}}\begin{bmatrix} 64 & 8 & -1 \\ -1 & 64 & 8 \\ 8 & -1 & 64 \end{bmatrix}, \frac{1}{\sqrt{4161}}\begin{bmatrix} 64 & -8 & 1 \\ 1 & 64 & -8 \\ -8 & 1 & 64 \end{bmatrix}$$

**14.** Procédé selon la revendication 11, dans lequel pour une matrice 4x4 R pour des symboles QAM, la matrice $R$ est toutes les matrices de rotation de nombres entiers 4x4 pour quatre symboles QAM sont du types

$$I_{4,4} = \frac{1}{\sqrt{85}}\begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

où $x_1$, $x_2$, $x_3$, $x_4 \in \{\pm 1, \pm 2, \pm 4, \pm 8\}$ et leur valeur absolue doivent être différents l'un de l'autre, et toutes les matrices de rotation de nombres entiers 4x4 pour des symboles 16-QAM sont du type

$$I_{16,4} = \frac{1}{\sqrt{4369}}\begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

où $x_1$, $x_2$, $x_3$, $x_4 \in \{\pm 1, \pm 4, \pm 16, \pm 64\}$ et leur valeur absolue doivent être différents l'un de l'autre, et toutes les matrices de rotation de nombres entiers 4x4 pour des symboles 64-QAM sont du type

$$I_{64,4} = \frac{1}{\sqrt{266305}}\begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

où $x_1$, $x_2$, $x_3$, $x_4 \in \{\pm 1, \pm 8, \pm 64, \pm 512\}$ et leur valeur absolue doivent être différents l'un de l'autre, et toutes les matrices de rotation de nombres entiers 4x4 pour symboles 256-QAM sont du type

$$I_{256,4} = \frac{1}{\sqrt{16843009}} \begin{bmatrix} x_1 & x_2 & x_3 & x_4 \\ -x_2 & x_1 & -x_4 & x_3 \\ -x_3 & x_4 & x_1 & -x_2 \\ -x_4 & -x_3 & x_2 & x_1 \end{bmatrix}$$

où $x_1$, $x_2$, $x_3$, $x_4 \in \{\pm 1, \pm 16, \pm 256, \pm 4096\}$ et leur valeur absolue doivent être différents l'un de l'autre.

**15.** Emetteur (500) pour augmenter une diversité d'un système de communication utilisant la modulation QAM, comprenant :

des moyens pour étaler et mettre en rotation $N$ symboles QAM ; et
un composant d'allocation pour allouer les $N$ symboles QAM étalés et mis en rotation sur $N$ canaux indépendants différents pour la transmission sur ceux-ci,
dans lequel l'émetteur comprend en outre un composant de rotation d'étalement pour étaler et mettre en rotation chaque vecteur de symbole QAM par multiplication par une matrice pré-spécifiée de rotation d'étalement de $N$x$N$ nombres entiers,
**caractérisé en ce que**
ladite matrice pré-spécifiée de rotation d'étalement de $N$x$N$ nombres entiers est orthogonale ; possède seulement des entrées positives ou négatives à la puissance deux de nombres entiers qui se produisent seulement une fois par rangée ou par colonne et chaque colonne ou rangée comprend au moins une positive ou une négative ; et possède un pré-facteur qui est calculé sous forme de norme euclidienne réciproque d'une rangée ou colonne.

FIG. 1

FIG. 2

200

FIG. 3

300

400

FIG. 4

500

FIG. 5

FIG. 6

FIG. 7

EP 1 985 082 B1

# FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1511211 A1

### Non-patent literature cited in the description

- **DOOSTNEJAD, ROYA ; LIM, TENG JOON, SR. ; SOUSA, ELVINO S.** Space-time spreading codes for a multiuser MIMO system. *Conference Record of the Thirty-Sixth Asilomar Conference on Signals, Systems and Computers,* 2002

- **RAULEFS, RONALD ; DAMMANN, ARMIN ; KAISER, STEFAN ; AUER, GUNTLIER.** Rotated spreading sequences for broadband multicarrier-CDMA. *IEEE 58th Vehicular Technology Conference,* 2003